# EUROPEAN PATENT APPLICATION

(11) **EP 3 062 195 A1**
(43) Date of publication of application: **31.08.2016**
(21) Application number: 15156941.5
(22) Date of filing: 27.02.2015
(51) Int. Cl.: G06F 3/01

(54) **Interactive mirror**

(71) Applicant: Iconmobile Gmbh, 10179 Berlin (DE)
(72) Inventor: Schmitz-Le Hanne, Adrian, 10179 Berlin (DE); Weinberger, Christian, 10781 Berlin (DE)
(74) Representative: Vossius & Partner Patentanwälte Rechtsanwälte mbB

(57) **Abstract**

The present invention relates to an interactive mirror comprising a reflective mirror surface, at least one display integrated in the mirror surface, at least one optical detector and a processor. The present invention further relates to a method for displaying information on an interactive mirror.

## Description

The present invention relates to an interactive mirror and to a method for displaying information on an interactive mirror.

In recent years, there has been an enormous increase in both digital communication and the retrieval of all types of information from digital sources such as the internet. This has, inter alia, led the ubiquitous presence of smart phones and tablet PCs. However, during every day life it is not always feasible to use such devices even though one would, in principle, be ready to consume information. For example, people spend a lot of time in front of mirrors, e.g., when brushing teeth or shaving in front of a bathroom mirror. In order to display information or communication tools in these situations, it has been proposed to incorporate displays into a mirror. For example US 2000/0080494 A1 describes a mirror information panel providing both an image and information to a user. The mirror information panel allows a user to review electronic information while performing personal hygiene procedures. Similarly, WO 2005/831552 A2 proposes incorporating a display into a mirror which display may be controlled by means of gestures.

However, these documents allocate certain regions of the mirror (namely, a smart mirror and a content window, respectively) for displaying information. In view of the countless potential applications (such as displaying news, the weather report, e-mails, a calendar and daily schedule, etc.) either the display may be too small or the mirror surface might be compromised by said display.

It is therefore an object of the present invention to provide an improved interactive mirror as well as an improved method for displaying information on an interactive mirror which address these problems. This object is achieved with an interactive mirror according to claim 1 and a method for displaying information on an interactive mirror according to claim 11. Preferred embodiments of the invention are described in the dependent claims.

Accordingly, the present invention relates to an interactive mirror comprising a reflective mirror surface, at least one display integrated in the mirror surface, at least one optical detector and a processor. The processor is adapted to determine the position of the head and optionally one or more other body parts of a person being present in front of the mirror on the basis of data captured by the at least one optical detector. The processor is further adapted to determine the contour of the reflection of the head and optionally of the one or more other body parts on the mirror surface as it appears to said person. The processor is further adapted to display information on the display and to arrange the displayed information on the basis of the determined contour of the reflection.

The invention is thus, inter alia, based on the idea to provide an adaptive display the content window or area of which may be adapted on the basis of the actual reflection of a person being present in front of the mirror. For this purpose, the outline or contour of at least the head of the person is determined and the display area is divided into a display region within said contour or outline and the surrounding display region. Now, information such as news, the weather report, e-mails, product descriptions, application and usage help and the like may be displayed on parts of the display which belong to the surrounding area. Thus, the person being in from of the mirror may at the same time see his/her reflection in the mirror surface and all the displayed information arranged, e.g., on one side of the mirror image or surrounding the mirror image.

Of course, the way how the information is arranged with respect to the reflective contour may depend on where the reflective contour is present on the mirror surface. For example, if the reflective contour is at the very edge of the mirror surface, all information may be displayed on the other side of the mirror. If, on the other hand, the person's head is properly centred with respect to the mirror surface, it may be more prudent to arrange some of the information (e.g., news and the weather report) on the left-hand side and other information (e.g., e-mails and a facebook account) on the right-hand side. Moreover, the way of arranging the displayed information may be based on the distance between the head and the display. Since a larger distance allows for a greater viewing angle or field of view, the information displayed on the display may be farther spread out if the distance between the head and the mirror surface is comparatively large. If, however, the user closely approaches the mirror surface the displayed information may be confined to a rather small area surrounding the periphery of the reflection.

Since the focus of the person's interest in many instances may be limited to the person's head (e.g., when putting on make-up) and possibly the person's neck (e.g., during shaving) it may, in some examples, be sufficient to determine the position and the contour of the reflection of the head and optionally the neck of the person and to arrange the displayed information on the basis of the determined contour of the head and optionally the neck. However, it is also preferred to determine the position and the contour of the reflection of one or more other body parts such as the upper part of the torso, the shoulders, the arms and/or the hands and arrange the displayed information also on the basis of the determined contour of these body parts.

The determination of the position of the head and optionally one or more other body parts of a person being present in front of the mirror generally may relate to the determination of the two-dimensional coordinates of the head (or a portion of the head such as the eyes and/or the mouth) in relation to the interactive mirror, i. e., to the coordinates within a plane that is substantially parallel to the surface of the mirror or the display, which may be determined, e.g., by one or more cameras. It is, however, preferred to determine the three-dimensional coordinates of the head (or a portion of the head such as the eyes and/or the mouth) in relation to the three-dimensional coordinates of the interactive mirror. The third coordinate (perpendicular to the surface of the display) or the entire three-dimensional position may be measured by specific distance sensors or, preferably, by triangulation using, e.g., two cameras mounted at at least two different positions. The third coordinate may also be estimated by measuring the apparent size of the person's head on camera image and relating this apparent size to the know average size of a human's head. It is particularly preferred that the position of the eyes of a person being present in front of the mirror are determined because the position of the eyes with respect to the interactive mirror has a direct influence on how the reflection appears to said person.

In a preferred embodiment of the present invention, the processor is adapted to determine the position of the heads and optionally one or more other body parts of two or more persons being present in front of the mirror and to arrange the displayed information on the basis of the determined contour of the reflection of the heads and optionally of the one or more other body parts of the two or more persons.

Preferably, the processor is adapted to arrange the displayed information such that at least a portion or all of the displayed information does not interfere with the contour of the reflection and the reflection within said contour. In other words, it is preferred that all or at least a portion of the displayed information is displayed in the display area surrounding the reflected contour. Depending on the type of displayed information, the information may be displayed with a certain minimum distance from the contour of the reflection for reasons of clarity. For example, the minimum distance between any displayed information and the contour of the reflection may be 3 cm, 5 cm or 10 cm. This may be, for example, advantageous in case of written information such as news or e-mails, which may be more easily readable if there is a certain distance between this information and the mirror reflection. Moreover, it may be advantageous if such written information does not erratically move on the display surface. Thus, it may be advantageous that the processor maintains the minimum distance between the displayed information and the periphery of the head and/or person within a certain range of, e.g., 1 cm to 20 cm or between 2 cm and 10 cm. If the person's head moves a little keeping the minimum distance within the predetermined range, the displayed information can be kept static. Only if the reflection of the person's head comes too close to the displayed information, the information may be displayed elsewhere.

The displayed information may, however, also comprise some kind of an animation such as an animation of the weather forecast which may be present in display areas directly adjacent to the reflected contour. For example, the reflection of the head may appear to a user in front of the mirror such as being surrounded or embedded within an animation of clouds, rain and/or sun to indicate the actual weather. In another embodiment, the displayed information may comprise an animated story which is, e.g., built up while a kid brushes his or her teeth. Also in this case, it may be preferable to use the entire display surface surrounding the contour for displaying this animated story which may also help in creating the impression that the reflected image of the head is part of the animated story.

The present invention is, however, not limited to only displaying information in the area surrounding the contour. In fact, it is preferred that the processor is also adapted to display the information on the display such that specific, predetermined information is displayed within the contour of the reflection. Such specific, predetermined information may, for example, relate to user tips relating to hygiene procedures and/or the use of certain sanitary articles. For example, the interactive mirror may highlight certain portions of a face of a user which need to be shaven or which have not yet been properly shaven. The interactive mirror may also indicate appropriate movements to be performed by a user who wants to brush his or her teeth. In these cases, the displayed information need be displayed within the contour of the reflection so as to link certain information with certain regions of the reflection.

Preferably, the processor is further adapted to perform a facial detection and/or recognition of the person being present in front of the mirror. Suitable facial recognition algorithms are well known in the art and may, e.g., identify facial features by extracting landmarks from an image of the person's face. For example, the processor may analyze the relative position, size and/or shape of the eyes, nose, cheek bones and/or jaw which features are then used to decide whether or not a person's face is present in front of the mirror surface as well as to define the face's outline. Well known recognition algorithms include principal component analysis using eigenfaces, Linear Discriminate Analysis, Elastic Bunch Graph Matching using the Fisherface Algorithm, the Hidden Markov Model, the Multilinear Subspace Learning using tensor representation and the neural motivated dynamic link matching. Several development environments such as the Core Image Framework on Apple OSX already contain such functionality ("CIFaceFeatures") which can be deployed to implement the approach discussed in this document.

The processor is preferably further adapted for determining the position of the eyes and/or mouth of the person. For this purpose, the processor may use the same or similar algorithms as those known for facial recognition in order to extract certain landmarks such as the position of the eyes and/or the mouth. It is to be noted that it is not necessarily required for the present invention to identify the person, but rather to identify certain landmarks of the face which allow to determine, e.g., the position of the eyes and/or the mouth of the person.

The position of the head is preferably determined on the basis of the recognized face and/or on the basis of the determined position of the eyes and/or the mouth of the person. For example, on the basis of the size of the face and/or certain parameters such as the distance between the eyes and/or the distance between the eyes and the mouth, the average shape of the head and/or the upper body may be estimated. In addition, or alternatively, the contour of the head and optionally one or more other body parts of the person being present in front of the mirror may be determined using edge detection. Again, suitable algorithms are well known in the art and include techniques such as Canny edge detection, the estimation of image gradients by applying different gradient operators and the like.

Preferably, the processor is further adapted to identify movements in the captured data and to determine the position of the head and optionally one or more other body parts of a person being present in front of the mirror on the basis of the identified movements. For example, the optical detector may comprise one or more digital video cameras and the processor may be adapted to identify static pixels, which do not change between subsequent frames, and dynamic pixels which change between subsequent frames. The border between static pixels and dynamic pixels, in essence, corresponds to the contour of the person in front of the mirror given that everything else in the room remains static. Again, algorithms to identify movements or moving parts in captured image data are well known in the art.

The optical detector preferably comprises one or a combination of: at least one digital camera, preferably at least two digital cameras mounted at at least two different positions in order to allow for triangulation, a laser camera, an infrared scanner. Preferably, the optical detector allows for both capturing optical data that allow to determine the person's contour and to identify the three-dimensional position of the head (or the eyes) of the person. One preferred embodiment of such an optical detector comprises at least two digital cameras mounted at different locations, preferably at or close to two edges or sides of the mirror (e.g., at or close to the lateral sides of the mirror). By means of triangulation the three-dimensional position of the head (or the eyes) of the person may be calculated on the basis of the camera images taken by at least two cameras. Moreover, the camera images may also be used to identify certain landmarks of, e.g., the person's face and to determine the person's (or the head's) contour. If the three-dimensional position of the person's eyes with respect to the reference frame of the mirror is known, the processor may calculate or estimate the contour of the person's head (and/or other body parts) as it appears on the mirror surface in the person's eyes, i.e. the location of the reflected contour on the mirror surface as perceived by the person.

The processor is preferably further adapted to determine the contour of the reflection at least twice per second, more preferably at least ten times per second, even more preferably at least twenty times per second and most preferably in real time. In other words, it is preferred that the displayed information adjusts to the movements of the person in real time so as to generate a smooth transmission between subsequent image frames. If the rate with which the image information is updated is greater than 20 Hz, any movements on the display will appear as a movie to the untrained eye. As mentioned above, this does not necessarily imply that all displayed information is moved around on the display surface in parallel to all movements performed by the person's head. Rather some information, in particular information having a certain distance from the reflected periphery, may remain static as long as possible so as to improve the viewing or reading experience of the user.

The present invention further relates to a method for displaying information on an interactive mirror comprising a reflective mirror surface, at least one display, at least one optical detector and a processor, wherein the interactive mirror preferably comprises any one or any combination of the features described above with respect to the interactive mirror of the present invention. The optical detector captures data and the processor determines the position of the head and optionally one or more other body parts of a person being present in front of the mirror on the basis of the captured data. The contour of the reflection of the head and optionally of the one or more other body parts on the mirror surface is determined as it appears to the person. Finally, information is being displayed on the display and arranged on the basis of the determined contour of the reflection.

The visual data supplied by the optical detector or sensor such as a digital camera are preferably analyzed, e.g., in the processor using the following steps:
Preferably, the analysis starts with a facial analysis. The visual data is analyzed via facial recognition algorithms, such as the CIFaceFeature class available in Apple OSX in order to verify and/or identify the presence of a face and it's position and to preferably determine the position of the eyes and/or the mouth. Once the face's position is known, the pixel offset in the visual data may be determined based on the class results, and an approximated head and/or upper body shape may be rendered based on the face/eye/mouth position.

As an option, a body shape analysis can take place, depending on the available data and the type of optical sensor(s) involved. For this purpose, the image is analyzed based on an edge detection approach to identify objects in the middle/center in front of the mirror. Based on the edges shape/object analysis may be performed to verify if it matches a normalized outline/shape of a human upper body in order to distinguish from other identified shapes. Additionally, the edge shape/object analysis may be enhanced/augmented by a motion detection analysis.

Based on the data created during facial analysis and/or the optional body shape analysis, a head and/or an upper body outline is rendered as a full transparency map into the data/images rendered on the screen. Additionally, the head and/or upper body outline may be available as a collision map to ensure that data and images are rendered in the correct position either next or inside the outline shape, based on the visual requirements.

Of course, the above-described analysis merely constitutes a preferred embodiment of the invention. Alternative or additional analysis steps may be employed instead.

The present invention is further related to the following aspects:
1. Interactive mirror comprising a reflective mirror surface, at least one display integrated in the mirror surface, at least one optical detector, and a processor adapted to determine the position of the head and optionally one or more other body parts of a person being present in front of the mirror on the basis of data captured by the at least one optical detector.
2. Interactive mirror according to aspect 1, wherein the processor is further adapted to determine the contour of the reflection of the head and optionally of the one or more other body parts on the mirror surface as it appears to said person.
3. Interactive mirror according to aspect 2, wherein the processor is further adapted to display information on the display and to arrange the displayed information on the basis of the determined contour of the reflection.
4. Interactive mirror according to aspect 3, wherein the processor is adapted to arrange the displayed information such that at least a portion of the displayed information does not interfere with the contour of the reflection.
5. Interactive mirror according to aspect 3 or 4, wherein the processor is adapted to display the information on the display such that specific information is displayed within the contour of the reflection.
6. Interactive mirror according to any one of the preceding aspects, wherein the processor is adapted to perform a facial recognition of the person in order to, e.g., recognize whether or not a person is present in front of the mirror surface.
7. Interactive mirror according to any one of the preceding aspects, wherein the processor is adapted to determine the position of the eyes and/or the mouth of the person.
8. Interactive mirror according to aspect 6 or 7, wherein the position of the head is determined on the basis of the recognized face and/or on the basis of the determined position of the eyes and/or the mouth.
9. Interactive mirror according to aspect 7 or 8, wherein the contour of the reflection of the head is determined on the basis of the determined position of the eyes and/or the mouth.
10. Interactive mirror according to any one of the preceding aspects, wherein the processor is adapted to identify movements in the captured data and wherein the processor is adapted to determine the position of the head and optionally one or more other body parts of a person being present in front of the mirror on the basis of the identified movements.
11. Interactive mirror according to any one of the preceding aspects, further comprising means for measuring the distance between the head of the person and the mirror surface.
12. Interactive mirror according to any one of the preceding aspects, wherein the optical detector comprises one or a combination of: at least one digital camera, preferably at least two cameras mounted at at lest two different positions, a laser scanner, an infrared scanner.
13. Interactive mirror according to any one of the preceding aspects, wherein the processor is adapted to determine the contour of the reflection of the head and optionally of the one or more other body parts and to arrange the displayed information on the basis of the determined contour of the reflection at least twice per second, more preferably at least ten times per second, most preferably at least 20 times per second.
14. Interactive mirror according to any one of the preceding aspects, wherein the processor is adapted to determine the contour of the reflection of the head and optionally of the one or more other body parts and to arrange the displayed information on the basis of the determined contour of the reflection in real time.
15. Interactive mirror according to any one of the preceding aspects, wherein the processor is integrated into the mirror.
16. Interactive mirror according to any one of the preceding aspects, wherein the mirror surface is partially transparent and wherein the integrated display is provided behind the partially transparent, reflective mirror surface.
17. Interactive mirror according to any one of the preceding aspects, further comprising a memory storing data, wherein the information displayed on the display comprises information contained in the stored data.
18. Interactive mirror according to any one of the preceding aspects, wherein the interactive mirror is adapted to communicate, by wire or wireless, with one or more external electronic devices.
19. Interactive mirror according to aspect 18, wherein the interactive mirror comprises one or a combination of the following interfaces: near field communication, Bluetooth transmitter and/or receiver, Wi-Fi, TP Ethernet, 433/866 MHz network, ZigBee network, RFID sensor, infrared transmitter and/or receiver, barcode reader, QR code reader or reader for a similar product identification code.
20. Interactive mirror according to aspect 18 or 19, wherein the processor is adapted to retrieve information from one or more external electronic devices and wherein the information displayed on the display comprises the information retrieved or part of it.
21. Interactive mirror according to any one of the preceding aspects, wherein the detector is integrated in the mirror surface or mounted on one or more of the mirror's sides, preferably on the mirror's bottom side.
22. Interactive mirror according to any one of the preceding aspects, wherein the mirror further comprises a speaker and wherein the processor is adapted to output information via the speaker.
23. Interactive mirror according to any one of the preceding aspects, wherein the display is adapted to display a time.
24. Interactive mirror according to any one of the preceding aspects, wherein the display is adapted to display a timer.
25. Interactive mirror according to aspect 23 or 24, wherein the displayed timer can be started by a user, preferably by gesture detection, by scanning a bar code and/or acoustically.
26. Interactive mirror according to any one of the preceding aspects, wherein the mirror, preferably the mirror surface, comprises means for interacting with a user.
27. Interactive mirror according to aspect 26, wherein the means for interacting comprises one or a combination of: touch screen, presence detector, motion detector, microphone, push buttons, a bar code reader or other optical detector suitable for scanning a bar code or product code.
28. Method for displaying information on an interactive mirror, the method comprising the following steps:
   a) providing an interactive mirror comprising a reflective mirror surface, at least one display, at least one optical detector, and a processor, preferably an interactive mirror according to any one of aspects 1 to 27;
   b) capturing data with the at least one optical detector and determining the position of the head and optionally one or more other body parts of a person being present in front of the mirror on the basis of data captured by the at least one optical detector;
   c) determining the contour of the reflection of the head and optionally of the one or more other body parts on the mirror surface as it appears to said person; and
   d) displaying information on the display and arranging the displayed information on the basis of the determined contour of the reflection.
29. Method according to aspect 28, wherein the information is displayed such that at least a portion of the displayed information does not interfere with the contour of the reflection.
30. Method according to aspect 28 or 29, wherein the information is displayed such that specific information is displayed within the contour of the reflection.
31. Method according to any of aspects 28 to 30, further comprising performing a facial recognition of the person.
32. Method according to any of aspects 28 to 31, further comprising determining the position of the eyes and/or the mouth of the person.
33. Method according to aspect 31 or 32, wherein the position of the head is determined on the basis of the facial recognition and/or on the basis of the determined position of the eyes and/or the mouth.
34. Method according to aspect 32 or 33, wherein the contour of the reflection of the head and optionally of the one or more other body parts is determined on the basis of the determined position of the eyes and/or mouth.
35. Method according to any of aspects 28 to 34, further comprising identifying movements in the captured data and determining the position of the head and optionally one or more other body parts of a person being present in front of the mirror on the basis of the identified movements.
36. Method according to any one of aspects 28 to 35, wherein steps b), c) and d) are performed at least twice per second, more preferably at least ten times per second, most preferably at least 20 times per second.
37. Method according to any one of aspects 28 to 36, wherein steps b), c) and d) are performed in real time.
38. Method according to any one of aspects 28 to 37, further comprising the step of retrieving information from one or more external electronic devices, wherein the information displayed on the display comprises the information retrieved or part of it.
39. Method according to aspect 38, wherein the information is retrieved via an internet-accessible data source, preferably via an internet-accessible database.
40. Method according to any one of aspects 28 to 39, wherein the information displayed comprises one or a combination of the following pieces of information: product information such as declarations of content or details on risks and side effects; instructions for use or application; examples of application; information on similar or related products; additional information designed to facilitate the use of the article such as the display of the period of use.
41. Method according to any one of aspects 28 to 40, wherein the information displayed comprises written information, image information and/or information provided in the form of a movie.
42. Method according to any one of aspects 28 to 41, wherein the mirror further comprises an input, preferably a gesture sensor, microphone, keyboard, a barcode and/or QR code reader and/or touch screen, the method further comprising the following steps: providing feedback by the user of an article using the input and transferring the feedback to the producer and/or retailer of the article.
43. Method according to aspect 42, wherein the feedback comprises a rating and/or an order of the article.

Preferred embodiments of the present invention are further illustrated with reference to the following Figures which show:
- Fig. 1: a schematic front view of a preferred embodiment of an interactive mirror according to the present invention;
- Fig. 2A: a partial section of the front view of a preferred embodiment of an interactive mirror according to the present invention;
- Fig. 2B: a partial section of a side view of the embodiment shown in Figure 2A,
- Fig. 2C: a partial section of an upper view of the embodiment shown in Figure 2A; and
- Figs. 3a and b: schematically two examples of a combined mirror image and display image as it appears to a person in front of the mirror, which may be created by the interactive mirror according to the present invention.

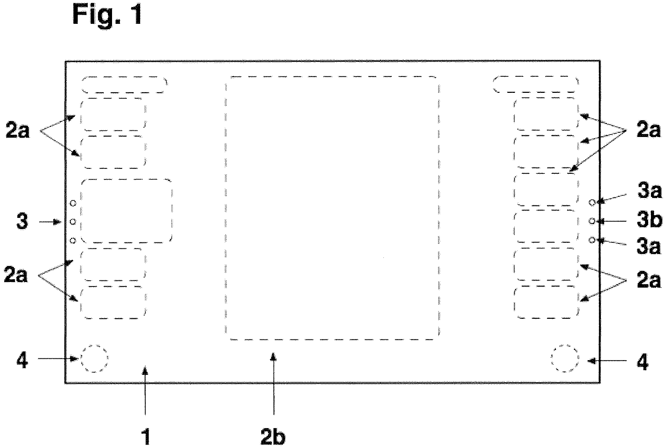

Figure 1 shows a front view of a preferred embodiment of an interactive mirror according to the present invention. The interactive mirror comprises an at least partially reflective mirror surface 1, at least one display 2 integrated in the mirror surface, at least one optical detector 3 and a processor (not shown) adapted to determine the position of the head and optionally one or more other body parts of a person being present in front of the mirror on the basis of data captured by the at least one optical detector 3. The interactive mirror may also comprise one or two optional microphones 4.

In the embodiment shown in Figure 1 numerous displays 2a of different shape and size are arranged at the sides of the mirror surface 1. Preferably, those displays 2a are not separate displays, but portions of two large displays provided at the edges of the mirror surface 1 which may be controlled by the processor. The mirror shown in Figure 1 further comprises one centrally arranged larger display 2b. Since the contour of the reflection of the head of a user will typically be present inside a central region, the processor is preferably adapted to display information on the central display 2b and to arranged the displayed information within that central display 2b on the basis of the determined contour of the reflection as it appears to the person being present in front of the mirror. However, rather than having two or more separate displays 2a and 2b, it is preferred that most of the mirror surface or even the entire mirror surface has a single incorporated display and that the processor is adapted to arranged the displayed information over the entire surface of that single display.

The one or more optical detectors 3 may comprise a digital camera, preferably at least two digital cameras mounted at at least two different positions, a laser scanner, an infrared scanner and the like. Of course, the optical detectors 3 (3a and 3b) need not be arranged as shown in Figure 1. However, in order to be able to determine the three-dimensional position of the head or the eyes of a user it is preferred that at least two optical detectors 3 are provided close to edges of the mirror such as the left and right edge or an upper and a lower edge. The same holds true with respect to the two microphones 4.

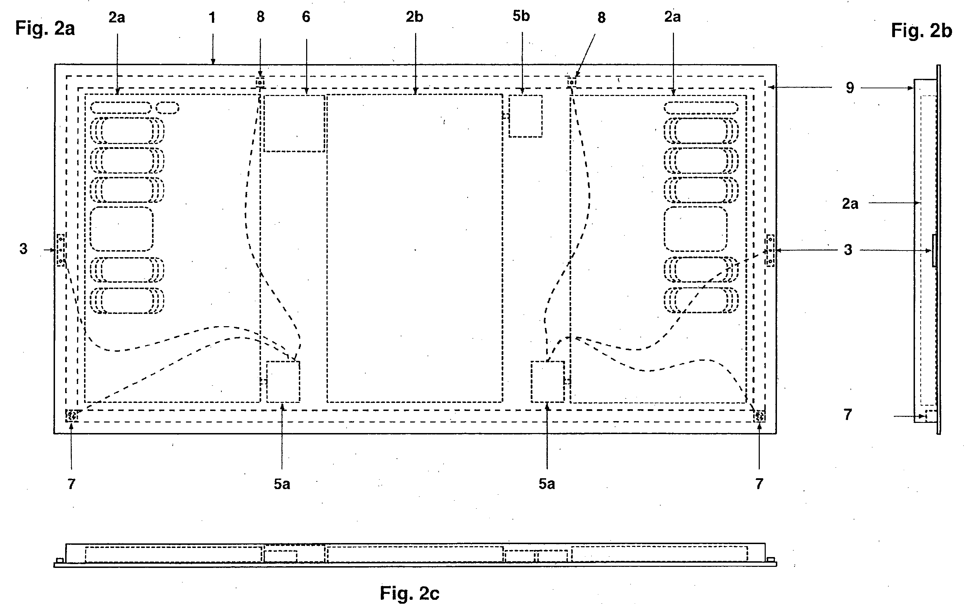

Figures 2A to 2C show further preferred embodiments of the interactive mirror according to the present invention. The mirror comprises a mirror surface 1, which is at least partially reflective in the optical spectrum, mounted on a frame 9. The mirror glass of the mirror surface 1 preferably comprises a reflective coating with a light transparency in the optical spectrum of at least 5%, preferably of at least 10% and even more preferably of at least 20%. The back side of the mirror glass is preferably lined with a black foil or sheeting in order to enhance contrast at portions of the mirror surface 1 where no display is present. Even though several displays 2a and 2b are shown in Figures 2A to 2C, it is to be noted that a single display may be provided which covers all or almost all of the mirror surface 1. Wherever the display is turned off, the presence of the display has the same effect as the black sheeting. In other words, portions of the mirror surface 1, where no information is displayed on the display, i.e. where no light is emitted by the display, will simply act as a reflecting mirror. Wherever the intensity of the display is high enough, the optical impression is, in fact, dominated by the displayed information and only a small amount of light is being reflected.

One or more processors 5a and 5b may be provided in order to control the optical detector and the display. Moreover, a power source 6 may be provided. Further detectors 7 and 8 may be provided in order to detect whether a person is present in front of the mirror.

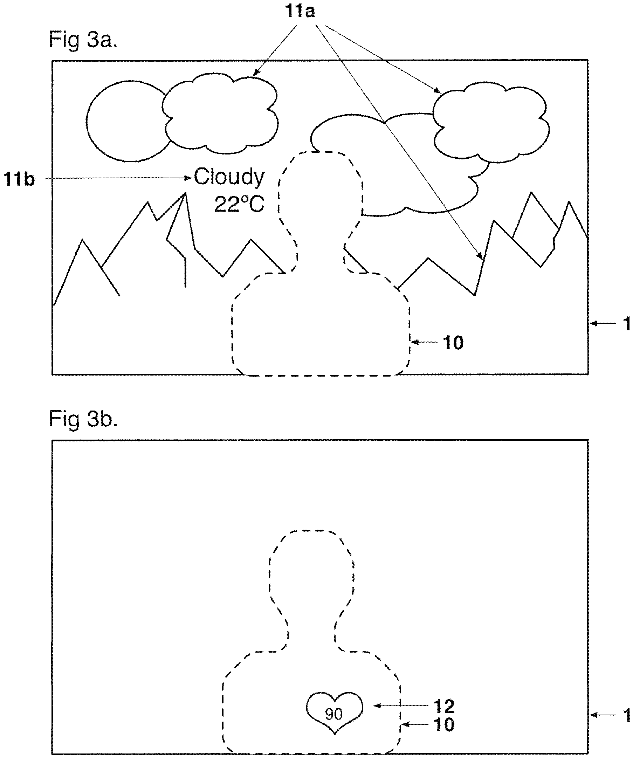

Figures 3a and 3b schematically show two examples of a combined mirror image and display image as it appears to a person in front of the mirror, which may be created by the interactive mirror according to the present invention. Figure 3a shows a front view of the mirror surface 1 with the display being incorporated therein. The mirror surface 1 contains the reflection 10 (just shown schematically) of a person in front of the mirror surface comprising the person's head and the upper torso. The contour of the reflection 10 is shown with dashed lines. The processor of the inventive mirror is adapted to determine said contour and to divide the display's surface into regions within said contour and regions outside of said contour. In case of Figure 3a, the person in front of the mirror will only see his/her own reflection within said contour (not shown).

The processor is further adapted to display information on the display of the mirror and to arrange the displayed information on the basis of the determined contour 10 of the reflection. In case of Figure 3a, the displayed information 11a, 11b is arranged such that the entire displayed information does not interfere with the contour of the reflection 10 and is only present in regions of the display outside of said contour. Depending on the type of displayed information, the information may be displayed with a certain minimum distance from the contour of the reflection for reasons of clarity. This may be, for example, advantageous in case of written information 11b such as the words "Cloudy, 22°C" which may be more easily readable if there is a certain distance between this information and the contour 10. Moreover, it may be advantageous if such written information does not erratically move on the display surface once the reflection moves over the mirror surface. The displayed information may, however, also comprise some kind of an animation 11 a which may be present in display areas directly adjacent to the reflected contour 10. For example, in case of Figure 3a, the reflection of the head is directly adjacent to one of the clouds such as being surrounded or embedded within the animation of the clouds. Similarly, the upper torso of the reflected person appears to be embedded within the displayed landscape (indicated by mountains).

The present invention is, however, not limited to only displaying information in the area surrounding the contour 10. In fact, it is preferred that the processor is also adapted to display the information on the display such that specific, predetermined information is displayed within the contour of the reflection. An example is shown in Figure 3b, where an animation of a heart 12 is shown within the contour 10 of the reflection, approximately at a position of the reflected torso where the person's heart may be. This may, for example, be suitable for displaying the person's heart rate as measured by an external device, which communicates with the mirror so as to allow for displaying the actual heart rate of the person. Of course, in addition or alternatively, other health parameters such as blood pressure, blood glucose and the like may be displayed as well.

Such specific, predetermined information may also relate to user tips relating to hygiene procedures and/or the use of certain sanitary articles. For example, the interactive mirror may highlight certain portions of a face of a user which need to be shaven or which have not yet been properly shaven. The interactive mirror may also indicate appropriate movements to be performed by a user who wants to brush his or her teeth. In these cases, the displayed information need be displayed within the contour of the reflection so as to link certain information with certain regions of the reflection.

Of course, the present invention is not limited to either of the two alternatives shown on Figures 3a and 3b. Rather, the processor may be adapted to arrange certain displayed information such that it does not interfere with the contour of the reflection and, subsequently and/or simultaneously, other information such that it is displayed within the contour of the reflection.

## Claims

1. Interactive mirror comprising a reflective mirror surface, at least one display integrated in the mirror surface, at least one optical detector, and a processor adapted to determine the position of the head and optionally one or more other body parts of a person being present in front of the mirror on the basis of data captured by the at least one optical detector, wherein the processor is further adapted to determine the contour of the reflection of the head and optionally of the one or more other body parts on the mirror surface as it appears to said person, and wherein the processor is adapted to display information on the display and to arrange the displayed information on the basis of the determined contour of the reflection.

2. Interactive mirror according to claim 1, wherein the processor is adapted to arrange the displayed information such that at least a portion of the displayed information does not interfere with the contour of the reflection.

3. Interactive mirror according to claim 1 or 2, wherein the processor is adapted to display the information on the display such that specific information is displayed within the contour of the reflection.

4. Interactive mirror according to any one of the preceding claims, wherein the processor is adapted to perform a facial recognition of the person.

5. Interactive mirror according to any one of the preceding claims, wherein the processor is adapted to determine the position of the eyes and/or mouth of the person.

6. Interactive mirror according to claim 4 or 5, wherein the position of the head is determined on the basis of the recognized face and/or on the basis of the determined position of the eyes and/or mouth.

7. Interactive mirror according to claim 6 or 6, wherein the contour of the reflection of the head and optionally of the one or more other body parts is determined on the basis of the determined position of the eyes and/or mouth.

8. Interactive mirror according to any one of the preceding claims, wherein the processor is adapted to identify movements in the captured data and wherein the processor is adapted to determine the position of the head and optionally one or more other body parts of a person being present in front of the mirror on the basis of the identified movements.

9. Interactive mirror according to any one of the preceding claims, wherein the optical detector comprises one or a combination of: at least one digital camera, preferably at least two cameras mounted at at lest two different positions, a laser scanner, an infrared scanner.

10. Interactive mirror according to any one of the preceding claims, wherein the processor is adapted to determine the contour of the reflection of the head and optionally of the one or more other body parts and to arrange the displayed information on the basis of the determined contour of the reflection at least twice per second, more preferably at least ten times per second, even more preferably at least 20 times per second, and most preferably in real time.

11. Method for displaying information on an interactive mirror, the method comprising the following steps:
a) providing an interactive mirror comprising a reflective mirror surface, at least one display, at least one optical detector, and a processor, preferably an interactive mirror according to any one of claims 1 to 10;
b) capturing data with the at least one optical detector and determining the position of the head and optionally one or more other body parts of a person being present in front of the mirror on the basis of data captured by the at least one optical detector;
c) determining the contour of the reflection of the head and optionally of the one or more other body parts on the mirror surface as it appears to said person; and
d) displaying information on the display and arranging the displayed information on the basis of the determined contour of the reflection.

12. Method according to claim 11, wherein the information is displayed such that at least a portion of the displayed information does not interfere with the contour of the reflection.

13. Method according to claim 11 or 12, wherein the information is displayed such that specific information is displayed within the contour of the reflection.

14. Method according to claim 11, 12 or 13, further comprising determining the position of the eyes and/or mouth of the person, wherein the position of the head is preferably determined on the basis of the determined position of the eyes and/or mouth.

15. Method according to any of claims 11 to 14, further comprising identifying movements in the captured data and determining the position of the head and optionally one or more other body parts of a person being present in front of the mirror on the basis of the identified movements.
